Europäisches Patentamt

European Patent Office

Office européen des brevets

(11) Publication number: **0 220 796**
**B1**

# EUROPEAN PATENT SPECIFICATION

(45) Date of publication of the patent specification:
**11.01.89**

(51) Int. Cl.⁴: **F01L 1/02**

(21) Application number: **86305630.5**

(22) Date of filing: **22.07.86**

(54) **Cam shaft drive in OHC V-Type engine.**

(30) Priority: **21.10.85 JP 235050/85**

(43) Date of publication of application:
**06.05.87 Bulletin 87/19**

(45) Publication of the grant of the patent:
**11.01.89 Bulletin 89/2**

(84) Designated Contracting States:
**DE FR GB**

(56) References cited:
**DE-A- 3 408 710**
**GB-A- 2 128 679**

(73) Proprietor: **HONDA GIKEN KOGYO KABUSHIKI KAISHA, 1-go, 1-ban, Minami-Aoyama 2-chome, Minato-ku Tokyo 107(JP)**

(72) Inventor: **Fukuo, Koichi, c/o Kabushiki Kaisha Honda Gijutsu Kenkyusho, 4-1 Chuoh 1-chome Wako-shi Saitama-ken(JP)**
Inventor: **Sato, Michio, c/o Kabushiki Kaisha Honda Gijutsu Kenkyusho, 4-1 Chuoh 1-chome Wako-shi Saitama-ken(JP)**

(74) Representative: **Leale, Robin George et al, FRANK B. DEHN & CO. Imperial House 15-19 Kingsway, London WC2B 6UZ(GB)**

**Description**

This invention relates to a cam shaft drive structure in an OHC (overhead cam shaft) V-type engine using a toothed belt, and in particular to an improved cam shaft drive structure according to which the longitudinal vibration of the toothed belt is effectively controlled.

Conventionally, a cam shaft of an OHC engine has typically been driven by a chain, but a toothed belt, which is lighter in weight and can provide quieter operation, has lately been preferred over a chain. A toothed belt is typically reinforced by steel wires of high tensile strength and stretches very little for its weight, and its longitudinal vibration is not a problem in normal circumstances. However, in a V-type engine, where the span lengths of the toothed belt between pulleys tend to be long, the longitudinal vibration of the toothed belt can become excessive when the maximum rotational speed of the engine is to be increased, and the strength of the root ends of the teeth of the belt may then become a problem.

The motion of a cam shaft drive system is typically coupled with the motion of the valve drive system and is therefore so complex that it is extremely difficult to predict its behavior. Generally, it has been considered desirable to reduce the moments of inertia of the pulleys as much as possible, with the object of raising the natural frequency of the system. Also, hitherto, in designing a cam shaft drive system for a V-type OHC engine, it has been customary to use a pair of cam shaft pulleys of identical configuration and having the smallest practically possible masses. However, according to analyses which we have conducted it has been found that such an approach is not necessarily appropriate in the case of a cam shaft drive structure for an OHC V-type engine, and on the contrary that a favorable result may be obtained by making the moment of inertia of one of the cam shaft pulleys greater than that of the other.

According to the present invention there is provided a cam shaft drive structure in which a toothed belt passes around a pair of cam shaft pulleys of the respective cylinder banks of an OHC V-type engine and around a crank shaft pulley, characterised in that: the moment of inertia of the cam shaft pulley on the tight side is greater than the moment of inertia of the cam shaft pulley on the slack side.

It can be seen that, if the moment of inertia of the cam shaft pulley on the slack side is set to a sufficiently small value and the moment of inertia of the cam shaft pulley on the tight side is then increased gradually from the same value as that of the cam shaft pulley on the slack side, the load or the tension applied to the toothed belt initially decreases and then starts to increase when the moment of inertia of the cam shaft pulley on the tight side exceeds a certain value; in other words, the load applied to the toothed belt has a local minimum with respect to the value of the moment of inertia of the cam shaft pulley on the tight side.

The reverse side of the toothed belt may conveniently be utilized for driving accessory equipment and for engaging a tensioning pulley therewith.

An embodiment of the invention will now be described by way of example and with reference to the accompanying drawings, in which:

Figure 1 is a partially broken away front view of an OHC V-type engine having a cam shaft drive structure according to the present invention;

Figure 2 is a oscillation model of the cam shaft drive structure of Figure 1;

Figure 3 is a graph showing changes in the load $F_T$ on the toothed belt against changes in the moment of inertia $I_2$ of the cam shaft pulley on the slack side and the rotational speed of the engine;

Figure 4 is a graph showing changes in the maximum load $F_{Tmax}$ on the toothed belt against changes in the moment of inertia $I_2$ of the cam shaft pulley on the slack side;

Figure 5 is a graph showing changes in the load $F_T$ on the toothed belt against changes in the moment of inertia $I_1$ of the cam shaft pulley on the tight side and the rotational speed of the engine; and

Figure 6 is a graph showing changes in the maximum load $F_{Tmax}$ on the toothed belt against changes in the moment of inertia $I_1$ of the cam shaft pulley on the tight side.

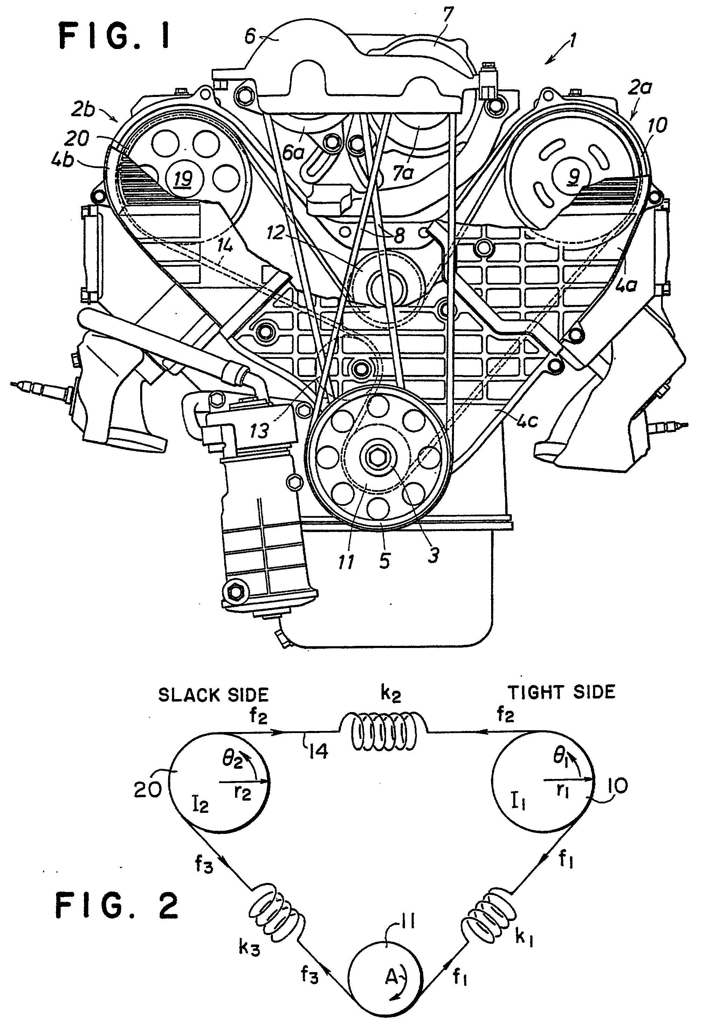

Figure 1 is a partially broken away front view of a V-type multi cylinder OHC engine according to the present invention. The engine 1 has a pair of banks of cylinders 2a and 2b arranged in the shape of a letter V, and a crank shaft 3 is disposed along the intersection line of the two cylinder banks. The axial end of the engine shown in Figure 1 is covered by three covers 4a to 4c, and a crank shaft pulley 5 is attached to the free end of the crank shaft 3 where it protrudes through one of the covers 4c. This pulley 5 is provided with at least a pair of pulley grooves, and V-belts 8 fitted into these grooves pass around and drive pulleys 6a and 7a, respectively, of a hydraulic pump 6 and an AC generator 7.

Pulleys 10, 20 and 11, located inside the covers 4a, 4b and 4c, are mounted on the external ends of a pair of cam shafts 9 and 19 and the outer circumference of the crank shaft 3, respectively. A toothed belt 14 passes around the three pulleys 10, 20 and 11. The reverse side of the toothed belt 14, where it extends between the pulleys 10 and 20 on the cam shafts 9 and 19, engages a pulley 12 of a cooling water pump, while the reverse side of the belt where it extends between the pulley 20 on the cam shaft 19 and the pulley 11 on the crank shaft 3, is engaged by an idler pulley 13 for applying tension to the toothed belt.

Figure 2 shows a vibration model of the cam shaft drive structure of the embodiment shown in Figure 1. Here, it is assumed that the crank shaft pulley 11 rotates in the clockwise direction in the sense of Figure 2 as indicated by arrow A, the moments of inertia of the pulleys 10 and 20 on the tight side and the slack side are $I_1$ and $I_2$ respectively, the spring constants of the spans of the toothed belt 14 extending between the pulley 11 on the crank shaft 3, the pulley 10 on the cam shaft 9 on the tight side and the pulley 20 on the cam shaft 19 on the slack side

are $k_1$, $k_2$ and $k_3$ respectively, the radii of the pulleys 10 and 20 are $r_1$ and $r_2$ respectively, and the angular displacements of the pulleys 10 and 20 are $\theta_1$ and $\theta_2$ respectively. Then the motions of the pulleys 10 and 20 on the two cam shafts 9 and 19 can be expressed by the following equations.

$$I_1 \ddot{\theta}_1 = -k_1 r_1{}^2 \theta_1$$
$$+ k_2 r_1 (-r_1 \theta_1 + r_2 \theta_2)$$
$$+ A_1 \sin \omega t$$
$$I_2 \ddot{\theta}_2 = -k_3 r_2{}^2 \theta_1$$
$$+ k_2 r_2 (-r_2 \theta_2 + r_1 \theta_1)$$
$$+ A_2 \sin(\omega t + 2/3 \cdot \pi)$$
...(1)

The pulley 12 of the cooling water pump and the tensioning pulley 13 are in contact with the reverse side of the toothed belt 14, which is devoid of teeth, and as such the contributions of the pulleys 12 and 13 can be practically neglected when analyzing the longitudinal vibration of the toothed belt. The term $A_1 \sin \omega t$ and $A_2 \sin(\omega t + 2\pi/3)$ represent the external forces applied by the valve drive system to the cam shaft pulleys 10 and 20.

By numerically solving Equation (1) and substituting the solutions to the following formulae:

$$f_1 = k_1 r_1 \theta_1$$
$$f_2 = k_2 (-r_1 \theta_1 + r_2 \theta_2)$$
$$f_3 = -k_3 r_2 \theta_2$$
...(2)

one can obtain the tensions $f_1$, $f_2$ and $f_3$ in the toothed belt 14 in the various spans thereof. Therefrom, one can obtain the load (tension) $F_T$ on the belt 14 at the crank shaft pulley 11 by the following formula:

$$F_T = f_1 - f_3 \quad ...(3)$$

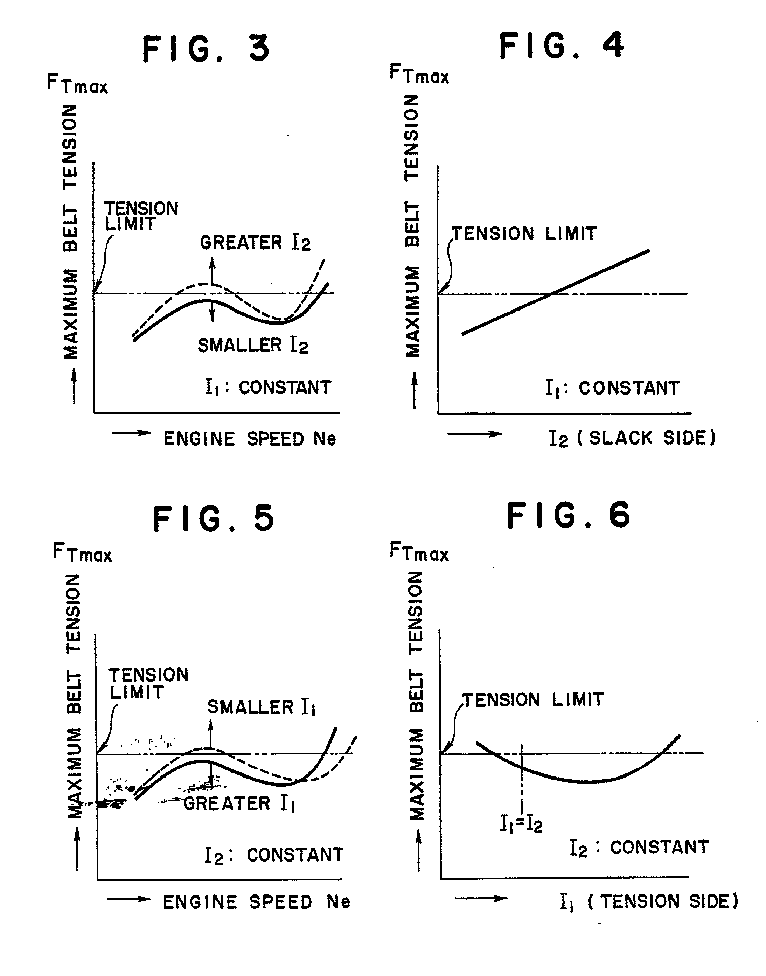

According to a numerical analysis which we have conducted, it has been found that if the moment of inertia $I_2$ of the cam shaft pulley 20 on the slack side is gradually increased from a possible minimum value while the moment of inertia $I_1$ of the cam shaft pulley 10 on the tight side is fixed, the load $F_T$ applied to the toothed belt 14 increases irrespective of whether the rotational speed Ne of the engine is in a high range or in a low range, as shown in the graph of Figure 3. In this graph, "tension limit" means an upper limit of the maximum belt tension which is considered to be permissible. In fact, by plotting the maximum load $F_{Tmax}$ on the toothed belt 14 against the moment of inertia $I_2$ of the cam shaft pulley 19 on the slack side, it can be seen that the moment of inertia $I_2$ should be as small as possible to obtain a favorable result, as shown in Figure 4.

It has also been found that if the moment of inertia $I_1$ of the cam shaft pulley 10 on the tight side is gradually increased from a possible minimum value while the moment of inertia $I_2$ of the cam shaft pulley 20 on the slack side is fixed, the load $F_T$ applied to the toothed belt 14 increases in the high speed range but decreases in the low speed range, as shown in Figure 5. In fact, by plotting the maximum load $F_{Tmax}$ on the toothed belt against the moment of inertia $I_1$ of the cam shaft pulley 10 on the tight side, it can be seen that the maximum load $F_{Tmax}$ on the belt can be minimized by setting the moment of inertia $I_1$ of the cam shaft pulley 10 on the tight side slightly greater than the moment of inertia $I_2$ of the cam shaft pulley 20 on the slack side, as shown in Figure 6.

Thus, by application of the present invention, the longitudinal oscillation of the toothed belt can be effectively controlled and the durability of the belt can thereby be substantially improved.

## Claims

1. A cam shaft drive structure in which a toothed belt (14) passes around a pair of cam shaft pulleys (10, 20) of the respective cylinder banks (2a, 2b) of an OHC V-type engine (1) and around a crank shaft pulley (5), characterised in that:
the moment of inertia of the cam shaft pulley (10) on the tight side is greater than the moment of inertia of the cam shaft pulley (20) on the slack side.

2. A cam shaft drive structure as claimed in claim 1, wherein a further pulley (12) is engaged by the reverse side of the span of the toothed belt (14) extending between the two cam shaft pulleys (10, 20).

3. A cam shaft drive structure as claimed in claim 2, wherein the said further pulley (12) is the drive pulley of an engine accessory.

4. A cam shaft drive structure as claimed in any of claims 1 to 3, wherein a further pulley (13) engages the reverse side of the span of the toothed belt (14) extending between one of the cam shaft pulleys (20) and the crank shaft pulley (5).

5. A cam shaft drive structure as claimed in claim 4, wherein the said further pulley is a belt tensioning pulley.

## Patentansprüche

1. Nockenwellenantriebskonstruktion, bei der ein zahnversehener Riemen (14) um ein Paar von Nockenwellenriemenscheiben (10, 20) der entsprechenden Zylinderreihen (2a, 2b) einer Maschine (1) mit obenliegender Nockenwelle vom V-Typ und um eine Kurbelwellenriemenscheibe (5) herum läuft, dadurch gekennzeichnet, daß das Trägheitsmoment der Nockenwellenriemenscheibe (10) auf der festen Seite größer als das Trägheitsmoment der Nockenwellenriemenscheibe (20) auf der lockeren Seite ist.

2. Nockenwellenantriebskonstruktion nach Anspruch 1, bei der eine weitere Riemenscheibe (12) durch die Rückseite des Spannbereichs des zahnversehenen Riemens (14) in Eingriff genommen ist, der sich zwischen beiden Nockenwellenriemenscheiben (10, 20) erstreckt.

3. Nockenwellenantriebskonstruktion nach Anspruch 2, bei der die weitere Riemenscheibe (12) die Antriebsriemenscheibe einer Maschinenzusatzeinrichtung ist.

4. Nockenwellenantriebskonstruktion nach einem beliebigen der Ansprüche 1 bis 3, bei der eine weitere Riemenscheibe (13) mit der Rückseite des Spannbereiches des zahnversehenen Riemens (14) in Eingriff steht, der sich zwischen einer der Nockenwellenriemenscheibe (20) und der Kurbelwellenriemenscheibe (5) erstreckt.

5. Nockenwellenantriebskonstruktion nach Anspruch 4, bei der die weitere Riemenscheibe eine Bandspannriemenscheibe ist.

**Revendications**

1. Structure d'entraînement d'arbre à cames dans laquelle une courroie crantée (14) passe autour d'une paire de poulies (10, 20) des arbres à cames des bancs de cylindres respectifs (2a, 2b) d'un moteur en V (1) à arbre à cames en tête et autour d'une poulie (5) de vilebrequin, caractérisée en ce que:
le moment d'inertie de la poulie (10) d'arbre à cames du côté tendu est plus grand que le moment d'inertie de la poulie (20) d'arbre à cames du côté mou.

2. Structure d'entraînement d'arbre à cames conforme à la revendication 1, dans laquelle une autre poulie (12) est entraînée par le côté envers de la portion de la courroie crantée (14) située entre les deux poulies (10, 20) d'arbre à cames.

3. Structure d'entraînement d'arbre à cames conforme à la revendication 2, dans laquelle ladite autre poulie (12) est une poulie motrice d'un accessoire du moteur.

4. Structure d'entraînement d'arbre à cames conforme à la revendication 3, dans laquelle une poulie supplémentaire (13) est entraînée par le côté envers de la portion de la courroie crantée (14) située entre l'une des poulies (20) d'arbre à cames et la poulie (5) de vilebrequin.

5. Structure d'entraînement d'arbre à cames conforme à la revendication 4, dans laquelle ladite poulie supplémentaire est un galet tendeur de courroie.

# FIG. I

# FIG. 2

SLACK SIDE $k_2$ TIGHT SIDE
$f_2$ $f_2$

# FIG. 3

$F_{Tmax}$

MAXIMUM BELT TENSION

TENSION LIMIT

GREATER $I_2$

SMALLER $I_2$

$I_1$ : CONSTANT

ENGINE SPEED Ne

# FIG. 4

$F_{Tmax}$

MAXIMUM BELT TENSION

TENSION LIMIT

$I_1$ : CONSTANT

$I_2$ ( SLACK SIDE )

# FIG. 5

$F_{Tmax}$

MAXIMUM BELT TENSION

TENSION LIMIT

SMALLER $I_1$

GREATER $I_1$

$I_2$ : CONSTANT

ENGINE SPEED Ne

# FIG. 6

$F_{Tmax}$

MAXIMUM BELT TENSION

TENSION LIMIT

$I_1 = I_2$

$I_2$ : CONSTANT

$I_1$ ( TENSION SIDE )